# FASCICULE DE BREVET EUROPEEN

(11) **EP 2 087 398 B1**
(45) Date de publication et mention de la délivrance du brevet: **20.02.2013**
(21) Numéro de dépôt: 07866435.6
(22) Date de dépôt: 25.10.2007
(51) Int. Cl.: G02C 11/00, G02C 5/14

(54) **ELEMENT DE PROTECTION DE BRANCHE DE LUNETTE, PLANCHE D'ELEMENTS, ET PROCEDE DE FABRICATION D'ELEMENTS**
VERFAHREN ZUM SCHUTZ VON BRILLENBÜGELN, ELEMENTTAFEL UND VERFAHREN ZUR HERSTELLUNG DER ELEMENTE
METHOD FOR PROTECTING SPECTACLES ARMS, MEMBER BOARD AND METHOD FOR MAKING THE MEMBERS

(30) Priorité: 03.11.2006 FR 0609625
(43) Date de publication de la demande: 12.08.2009
(73) Titulaire: Daniel, Pierre, 27000 Evreux (FR)
(72) Inventeur: Daniel, Pierre, 27000 Evreux (FR)
(74) Mandataire: Marconnet, Sébastien
(86) Numéro de dépôt international: PCT/FR2007/001762
(87) Numéro de publication internationale: WO 2008/053096

(56) Documents cités:
- EP-A2- 0 305 281
- DE-U1-202004 018 416
- GB-A- 2 200 473
- GB-A- 2 398 884
- US-A1- 5 583 585
- US-A1- 2001 043 308

## Description

La présente invention concerne un élément de protection temporaire de branche de lunette, ainsi qu'une planche comportant plusieurs éléments de protection, et un procédé de fabrication d'un exemple d'un élément de protection.

On utilise, pour le traitement de la chevelure dans les salons de coiffure, des agents chimiques divers, notamment de teinture. Lorsqu'une personne coiffée garde ses lunettes pendant de telles opérations de traitement, les branches de lunettes risquent d'être au contact de ces agents chimiques et de subir une coloration, une décoloration ou même une corrosion. Pour que les personnes coiffées puissent conserver leurs lunettes, par exemple pour lire, pendant des traitements qui sont souvent longs, on utilise des éléments de protection temporaire de branches de lunettes, ayant essentiellement une forme de tube et placés sur chaque branche de lunette.

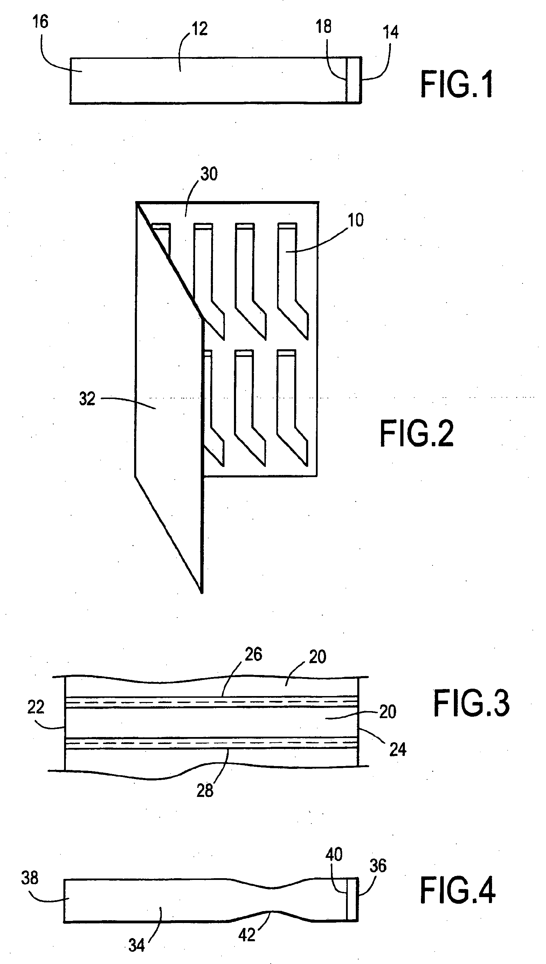

On connaît déjà, comme éléments de protection, de simples tubes, tels que représentés sur la figure 1, comprenant une enveloppe tubulaire 12 découpée à ses extrémités, au niveau de lignes de découpe 14, 16, d'un chapelet de tels tubes, soudé en 18 près d'une extrémité 14. Ces chapelets de tubes sont formés à partir d'un tube de matière plastique extrudée. Compte tenu de cette technique, il n'est pas possible de réaliser des tubes d'épaisseur très faible, et en matériau extrêmement souple. En conséquence, lorsqu'un tel tube est placé sur une branche de lunette en forme de crosse, la partie disposée du côté intérieur du coude de la crosse est large et elle doit être déformée lorsque les lunettes sont mises en place. Cette déformation constitue des plis qui créent une gêne contre la peau de la tête et de l'oreille. L'inconfort ainsi créé est essentiellement dû au fait qu'il n'est pas possible d'obtenir des tubes de matériau extrêmement souple possédant des propriétés suffisantes de manipulation d'une part et de protection contre les agents chimiques d'autre part. En outre, ces éléments ont l'inconvénient de pouvoir glisser le long de la branche de lunette, et donc d'assurer un mauvais positionnement longitudinal du tube le long de la branche de lunette.

On connaît aussi, d'après le document EP-305 281, des éléments de protection de branches de lunettes ayant une forme de crosse, comme indiqué sur la figure 2 qui est extraite de ce document. Sur cette figure, des éléments de protection de branches de lunettes 10 sont fixés sur une feuille de support représentée sous forme de deux pages 30, 32 articulées autour d'un pli. Les éléments 10 de protection décrits dans le document précité ont une enveloppe formée de deux feuilles de matière plastique soudées l'une à l'autre le long des côtés longitudinaux et ayant une extrémité ouverte dont les bords sont décalés dans la direction longitudinale de l'enveloppe afin que l'ouverture soit facile. Ces éléments de protection sont conditionnés sur une feuille de support 30, 32. Ils peuvent donc être réalisés avec des feuilles de matière plastique extrêmement minces et souples si bien que les éléments ont une très grande souplesse et ne créent aucune gêne. L'inconfort des simples tubes est donc supprimé d'une part grâce à la souplesse du matériau et d'autre part grâce à la forme de crosse qui réduit la largeur de l'élément à l'emplacement de contact avec l'oreille. En outre, grâce au positionnement du coude de la crosse sur le coude de la branche de lunette, l'élément ne peut pas glisser le long de la branche de lunette, et il assure donc un bon positionnement longitudinal du tube le long de la branche de lunette.

Le document US 2001/043308 décrit deux modes de réalisation d'un protecteur de branche de lunette formé d'un tube de largeur constante sur la plus grande partie de sa longueur, depuis l'ouverture d'entrée d'une branche de lunette, puis de largeur croissant progressivement vers l'extrémité fermée. Dans un mode de réalisation, le tube est rectiligne et analogue à celui qu'on a décrit en référence à la figure 1 et présente les mêmes inconvénients, et, dans un autre mode de réalisation, le tube est coudé et analogue à celui qu'on a décrit en référence à la figure 2.

On connaît aussi des éléments de protection 20 tels que représentés sur la figure 3, réalisés en bande par pliage sur elle-même d'une feuille à une extrémité 24, l'extrémité opposée de l'élément 20 portant la référence 22 étant ouverte pour l'introduction d'une branche de lunette. Les éléments adjacents 20 sont séparés par une ligne de soudure 26, 28 qui est perforée afin que les éléments 20 puissent être séparés un à un d'un rouleau formé de la bande enroulée. Ces éléments n'ont pas rencontré beaucoup de succès, car la séparation d'un élément sur toute sa longueur n'est pas commode. En outre, les bords obtenus ont une forme dentelée qui crée un inconfort puisque ce bord est directement au contact de la peau de la personne portant les lunettes.

La supériorité des éléments de protection décrits en référence à la figure 2 a été reconnue depuis longtemps, mais ces éléments ont un coût relativement élevé. En effet, comme l'indique la figure 2, à cause de la forme de crosse, les éléments adjacents 10 de la feuille de support 30, 32 doivent être éloignés si bien que, avec une planche constituée de la feuille de support 30, 32 et des deux feuilles de matière plastique souple superposées, il n'est possible de réaliser qu'un petit nombre d'éléments de protection.

L'invention a pour objet la réalisation d'éléments de protection de branches de lunettes ayant les avantages, notamment de confort, des éléments décrits en référence à la figure 2 dont la qualité est incontestablement reconnue, tout en réduisant considérablement le coût d'obtention des éléments de protection.

On pourrait envisager de réaliser, sur des planches de support telles que 30, 32 représentées sur la figure 2, des éléments de protection ayant, au lieu de la forme de crosse représentée sur la figure 2, une forme rectiligne, telle que décrite dans le document précité US 2001/043308, pour rapprocher les éléments les uns des autres et donc en réaliser un plus grand nombre sur une même feuille de support. Cependant, les éléments ont alors les inconvénients des éléments de forme tubulaire, notamment l'inconvénient d'un mauvais positionnement longitudinal et de la possibilité du glissement du tube le long de la branche de lunette.

L'invention concerne, par rapport aux éléments de protection décrits dans le document précité EP-305 281, un perfectionnement qui comprend la combinaison de la technologie décrite dans ce document, mais appliquée à la réalisation d'éléments rectilignes, permettant la multiplication du nombre d'éléments sur une même feuille de support, et de l'incorporation d'un dispositif assurant le positionnement de l'élément suivant la longueur de la branche de lunette.

Plus précisément, les éléments de protection selon l'invention comportent un dispositif de pliage préférentiel disposé afin qu'il se trouve au niveau du coude d'une branche de lunette en forme de crosse, ce dispositif d'une part assurant le positionnement longitudinal de l'élément sur la branche de lunette et d'autre part réduisant la quantité de matière de l'élément entre la branche de lunette et l'emplacement de contact de l'élément avec la peau de la tête et de l'oreille de la personne coiffée. Dans un mode de réalisation préféré, ces éléments de protection tirent avantage des propriétés de confort obtenues grâce à la matière plastique très souple des éléments réalisés sur une feuille de support, suivant la technologie du document précité EP-305 281.

Ainsi, l'invention combine les avantages du positionnement longitudinal de l'élément de protection sur la branche de lunette à un coût réduit obtenu grâce à des éléments de forme rectiligne, et de préférence au confort et à la commodité de manipulation des éléments de protection réalisés sur une feuille de support, comme décrit dans le document EP-305 281.

Plus précisément, l'invention concerne un élément de protection temporaire d'une branche de lunette contre des agents chimiques, l'élément comportant une enveloppe tubulaire allongée ayant au moins une extrémité ouverte par laquelle elle peut être disposée sur une branche de lunette, l'enveloppe étant formée de matière plastique imperméable aux agents chimiques de traitement et ayant, sur toute sa longueur, une section telle que la branche de lunette n'est pas serrée et qu'il reste une place importante autour de la branche de lunette, facilitant l'introduction d'une branche de lunette dans l'enveloppe, l'enveloppe étant suffisamment longue pour recouvrir normalement au moins la plus grande partie d'une branche de lunette, l'enveloppe prenant une forme sensiblement plate dans le plan d'une branche de lunette en forme de crosse lorsqu'elle est disposée sur une telle branche ; selon l'invention, l'enveloppe comprend, à un emplacement correspondant à la position du coude d'une branche de lunette en forme de crosse, un dispositif de pliage préférentiel autour d'un axe transversal, destiné à réduire à cet emplacement la distance comprise entre le bord interne du coude de la branche de lunette et le bord de l'élément disposé du côté de l'intérieur du coude.

Dans un mode de réalisation, le dispositif de pliage préférentiel est une réduction de section de l'enveloppe tubulaire.

Dans une variante, la réduction de section de l'enveloppe tubulaire est une réduction de largeur de l'élément sous forme plate, la réduction de largeur étant par exemple progressive.

Dans une autre variante, la réduction de section de l'enveloppe tubulaire est une réduction localisée progressive de section de tube sous forme ouverte.

Dans un autre mode de réalisation, le dispositif de pliage préférentiel comporte un froncement de la paroi de l'enveloppe.

De préférence, l'enveloppe a une seule extrémité ouverte.

De préférence, les bords de l'ouverture de l'extrémité ouverte sont décalés l'un par rapport à l'autre dans la direction longitudinale de l'enveloppe.

Dans un mode de réalisation très avantageux, l'enveloppe est formée de deux feuilles de matière plastique soudées l'une à l'autre le long de côtés longitudinaux et, à l'emplacement du dispositif de pliage préférentiel, la distance comprise entre les deux côtés longitudinaux est réduite.

L'invention concerne aussi une planche d'éléments de protection de branches de lunettes, qui comporte une feuille de support et plusieurs éléments de protection selon l'une quelconque des revendications précédentes, fixés à la feuille de support. Par exemple, la feuille de support est formée de papier.

De préférence, les éléments de protection sont directement fixés à la feuille de support par leur matière plastique.

L'invention concerne aussi un procédé de fabrication d'éléments de protection temporaire de branches de lunettes, du type qui comprend l'extrusion d'un tube continu de matière plastique à propriétés thermorétractables, puis la découpe du tube à intervalles réguliers pour la formation de tronçons de tube destinés à constituer des éléments de protection temporaire de branches de lunettes ; selon l'invention, le procédé comprend, avant la découpe du tube, une étape de chauffage localisé du tube afin que sa section diminue.

De préférence, le procédé comporte, avec la découpe du tube, une étape de soudage transversal du tube à proximité de la découpe.

D'autres caractéristiques et avantages de l'invention seront mieux compris à la lecture de la description qui va suivre, faite en référence aux dessins annexés sur lesquels, les figures 1 à 3 concernant la technique antérieure ayant déjà été décrites :
la figure 4 est une vue en élévation d'un élément de protection selon l'invention, comprenant un dispositif de pliage préférentiel selon l'invention ;
la figure 5 est une vue en élévation d'un élément de protection selon l'invention qui représente une variante de dispositif de pliage préférentiel ;
la figure 6 représente un autre mode de réalisation de dispositif de pliage préférentiel ;
la figure 7 représente un mode de réalisation préféré d'élément de protection de branche de lunette selon l'invention, réalisé par la technique décrite en référence à la figure 2 ; et
la figure 8 est une vue en plan d'une planche d'éléments de protection de branches de lunettes selon l'invention.
La figure 4 représente un élément de protection temporaire de branche de lunette dans un mode de réalisation de l'invention qui correspond à un perfectionnement de l'élément de protection de la technique antérieure décrit en référence à la figure 1, par incorporation d'un dispositif de pliage préférentiel selon l'invention.

Plus précisément, l'élément de protection comporte une enveloppe formée d'un tronçon de tube 34 qui, à ses deux extrémités 36, 38, est séparé d'autres tronçons par des lignes de perforations qui sont destinées à être déchirées au fur et à mesure de la consommation des éléments de protection. De préférence, une soudure 40 est formée à proximité d'une extrémité 36. Ainsi, l'élément représenté sur la figure 4 est destiné à être ouvert par l'ouverture 38 pour l'introduction de l'extrémité d'une branche de lunette jusqu'au fond du tube.

Selon l'invention, l'élément du type représenté sur la figure 1 est perfectionné par l'incorporation d'un dispositif de pliage préférentiel constitué, dans l'exemple représenté, par un rétrécissement ou une réduction de section 42 du tube. Ainsi, la plus petite section du tronçon 34 se trouve à un emplacement correspondant au coude d'une branche de lunette en forme de crosse.

Un tel rétrécissement 42 peut être réalisé dans un procédé de fabrication qui comprend l'extrusion d'un tube continu de matière plastique à propriétés thermorétractables, puis le chauffage localisé du tube à toute sa périphérie pratiquement afin que sa section diminue à un emplacement de pliage préférentiel, puis la découpe du tube à intervalles réguliers et son soudage transversal à proximité de la découpe, pour la formation de tronçons de tube destinés à constituer des éléments de protection temporaire de branches de lunettes.

Par rapport à l'élément de protection représenté sur la figure 1, l'élément représenté sur la figure 4 présente au moins deux avantages importants, d'une part le fait que le rétrécissement 42 constituant le dispositif de pliage préférentiel se positionne sur le coude et positionne donc l'élément de protection suivant la longueur de la branche de lunette, et d'autre part le fait que la quantité de matière à l'emplacement du coude de la branche de lunette, qui est le plus proche de la peau de l'oreille et de la tête de la personne qui porte les lunettes, est notablement réduite et réduit donc la gêne et l'inconfort, même lorsque le matériau du tube de l'élément 34 est relativement épais ou rigide.

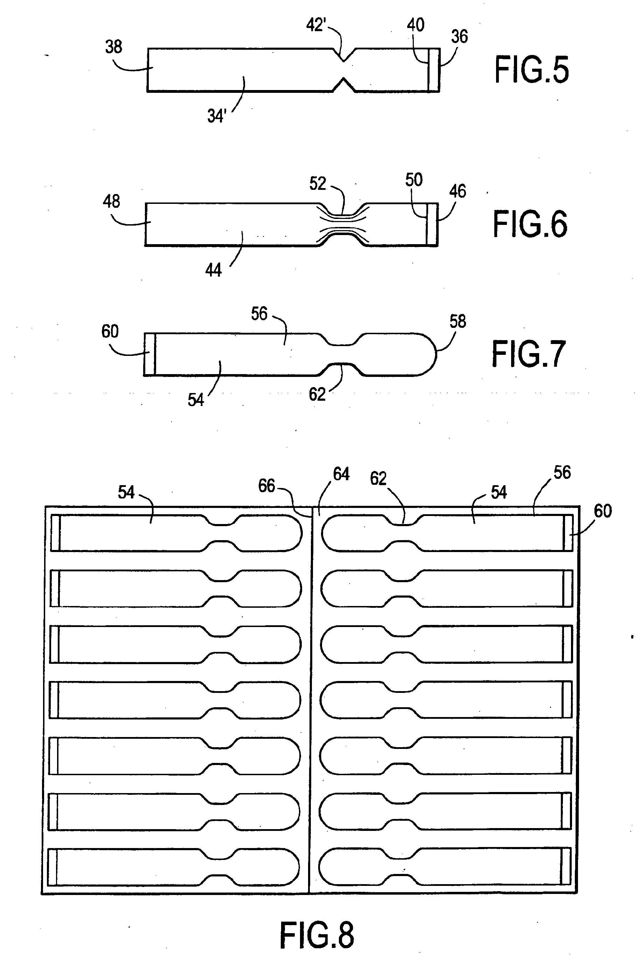

La figure 5 représente une variante d'enveloppe 34' du mode de réalisation de la figure 4. Dans cette variante, à la place d'un rétrécissement de section 42 obtenu par chauffage mettant en oeuvre les propriétés thermorétractables du matériau, la section est réduite lorsque, après que le tube a été écrasé à plat, des encoches 42' sont formées sur les côtés, et sont soudées pour assurer la continuité de l'étanchéité aux deux bords. Bien qu'on ait représenté ces soudures avec des bords nets, il est souhaitable, pour le confort du contact, que la forme des encoches soit arrondie, avec une forme analogue à celle qui est représentée sur la figure 4.

Le dispositif de pliage préférentiel n'est pas obligatoirement une réduction de section, tel qu'illustré par les figures 4 et 5. En effet, la figure 6 représente un mode de réalisation dans lequel le dispositif de pliage préférentiel est constitué par un froncement d'une partie de tube parallèlement à des génératrices.

Plus précisément, comme l'indique la figure 6, une enveloppe formée d'un tronçon de tube 44, ayant des extrémités 46 et 48 et une soudure 50 de fermeture d'une extrémité, comporte, à l'emplacement correspondant à la position du coude d'une branche de lunette en forme de crosse, un froncement suivant des génératrices du tube, c'est-à-dire parallèlement à l'axe du tube. De cette manière, le diamètre efficace du tube dans la région froncée 52 est nettement réduit et facilite le pliage, sans perte de l'étanchéité aux agents chimiques.

Les figures 7 et 8 illustrent un mode de réalisation préféré de l'invention. Ce mode de réalisation est mis en oeuvre de la même manière que les éléments de protection temporaires décrits dans le document précité EP-305 281 auquel on peut se référer, c'est-à-dire par soudage de deux feuilles minces et souples sur une feuille de support 64.

La figure 7 représente un élément de protection séparé, et la figure 8 une planche d'éléments de protection. Sur la figure 7, une enveloppe formée 54 de l'élément de protection est délimitée sur ses côtés longitudinaux 56 et à son extrémité fermée 58 par une soudure continue des deux feuilles. A l'extrémité ouverte 60, les deux feuilles sont de préférence légèrement décalées, car cette disposition facilite l'ouverture de l'élément pour l'introduction de l'extrémité d'une branche de lunette. Au lieu d'être rectiligne entre les deux extrémités 60 et 58, la soudure de chaque côté présente une forme sinueuse dans une partie ou encoche 62 afin que la section du tube soit réduite à l'emplacement correspondant au coude de la forme en crosse d'une branche de lunette.

Bien qu'on ait représenté une forme de courbure arrondie particulièrement avantageuse, toute autre forme telle que décrite en référence à la figure 5 peut être utilisée. Grâce à la souplesse des feuilles constituant l'enveloppe 54 de l'élément de protection, il est même possible de former des coins nets sans gêne notable pour l'utilisateur.

Les feuilles utilisées pour l'enveloppe 54 de l'élément de protection sont de préférence des feuilles très minces, par exemple de polyoléfine, l'épaisseur étant inférieure à 10 µm et de préférence étant de l'ordre de quelques microns. Bien que les deux feuilles ou l'une d'elles seulement puissent être opaques, il est préférable que les feuilles soient transparentes et avantageusement colorées, par exemple en bleu.

La largeur entre les côtés de l'enveloppe 54 de l'élément de protection est suffisante pour que la branche de lunette ne soit pas serrée, même dans la partie de plus petite section qui doit laisser passer l'extrémité la plus externe de la branche de lunette. Cette largeur relativement importante facilite le glissement de la branche de lunette.

La figure 8 représente une planche d'éléments de protection de branches de lunettes comprenant une feuille de support 64, par exemple formée de papier. Grâce à la forme rectiligne des enveloppes 54 des éléments de protection, ceux-ci peuvent être proches les uns des autres et peuvent se trouver en grand nombre sur une même feuille. La référence 66 indique une ligne de pliage de la feuille 64 qui, une fois pliée, protège les éléments de protection.

Dans le procédé de fabrication de cette planche, des matrices ayant le profil voulu pour la soudure de chaque enveloppe 54 d'élément de protection exercent une pression sur les feuilles de matière plastique et la feuille de support pour souder et couper les enveloppes 54 des éléments de protection et les fixer à la feuille de support.

## Revendications

1. Elément de protection temporaire d'une branche de lunette contre des agents chimiques, l'élément comportant une enveloppe tubulaire allongée (34, 34', 44, 54) ayant au moins une extrémité ouverte (38, 48, 60) par laquelle elle peut être disposée sur une branche de lunette,
- l'enveloppe (34, 34', 44, 54) étant formée de matière plastique imperméable aux agents chimiques de traitement et ayant, sur toute sa longueur, une section telle que la branche de lunette n'est pas serrée et qu'il reste une place importante autour de la branche de lunette, facilitant l'introduction d'une branche de lunette dans l'enveloppe (34, 34', 44, 54),
- l'enveloppe (34, 34', 44, 54) étant suffisamment longue pour recouvrir normalement au moins la plus grande partie d'une branche de lunette,
- l'enveloppe (34, 34', 44, 54) prenant une forme sensiblement plate dans le plan d'une branche de lunette en forme de crosse lorsqu'elle est disposée sur une telle branche,
**caractérisé en ce que** l'enveloppe (34, 34', 44, 54) de forme rectiligne comprend, à un emplacement correspondant à la position du coude d'une branche de lunette en forme de crosse, un dispositif (42, 42', 52, 62) de pliage préférentiel autour d'un axe transversal, destiné à réduire à cet emplacement la distance comprise entre le bord interne du coude de la branche de lunette et le bord de l'élément disposé du côté de l'intérieur du coude,
- ce dispositif de pliage étant constitué par un rétrécissement ou une réduction de section de l'enveloppe ou comporte un froncement (52) de la paroi de l'enveloppe.

2. Elément de protection selon la revendication 1, **caractérisé en ce que** la réduction de section de l'enveloppe tubulaire (34, 34', 54) est une réduction de largeur de l'élément sous forme plate.

3. Elément de protection selon la revendication 2, **caractérisé en ce que** la réduction de largeur est progressive.

4. Elément de protection selon l'une des revendications 1 à 3, **caractérisé en ce que** la réduction de section de l'enveloppe tubulaire (34, 34', 54) est une réduction localisée progressive (42, 42', 62) de section de tube.

5. Elément de protection selon la revendication 1, **caractérisé en ce que** l'enveloppe (54) est formée de deux feuilles de matière plastique soudées l'une à l'autre le long de côtés longitudinaux et, à l'emplacement du dispositif (62) de pliage préférentiel, la distance comprise entre les deux côtés longitudinaux est réduite.

6. Elément de protection selon l'une quelconque des revendications précédentes, **caractérisé en ce que** les bords de l'ouverture (60) d'une extrémité sont décalés l'un par rapport à l'autre dans la direction longitudinale de l'enveloppe (54).

7. Planche d'éléments de protection de branches de lunettes, **caractérisée en ce qu'**elle comporte une feuille de support (64) et plusieurs éléments de protection selon la revendication 5, fixés à la feuille de support.

8. Procédé de fabrication d'éléments de protection temporaire de branches de lunettes selon l'une des revendications 1 à 6, **caractérisé en ce qu'**il comporte :
- un étape d'extrusion d'un tube continu de matière plastique thermorétractable,
- une étape de chauffage localisé du tube afin que sa section diminue,
- puis une étape de découpe du tube à intervalles réguliers pour la formation de tronçons de tube destinés à constituer des enveloppes (34) d'éléments de protection temporaire de branches de lunettes.

## Claims

1. A temporary protection member for protecting an arm of a pair of glasses against chemical agents, this member comprising an elongated tubular envelope (34, 34', 44, 54) having at least one open end (38, 48, 60) via which it can be positioned onto an arm of a pair of glasses,
- the envelope (34, 34', 44, 54) being formed from a plastic material impermeable to chemical treatment agents and having, throughout its length, a cross-section such that the arm of the pair of glasses is not tightened and such that a significant space is left around the arm of the pair of glasses, easing the introduction of an arm of a pair of glasses into the envelope (34, 34', 44, 54),
- the envelope (34, 34', 44, 54) being long enough to normally cover at least the larger part of an arm of a pair of glasses,
- the envelope (34, 34', 44, 54) taking on a substantially flat shape along the plane of a hook-shaped arm of a pair of glasses when positioned on such an arm,
**characterised in that** the rectilinear-shaped envelope (34, 34', 44, 54) comprises, at a location corresponding to the position of the bend of a hook-shaped arm of a pair of glasses, a preferred folding device (42, 42', 52, 62) folding about a transverse axis, designed to reduce at said location the distance between the inner edge of the bend of the arm of the pair of glasses and the edge of the member positioned on the inner side of the bend,
- this folding device being comprised from a narrowing or reduction in the cross-section of the envelope or comprises a crumpling (52) of the envelope wall.

2. A protection member according to claim 1, **characterised in that** the reduction in the cross-section of the tubular envelope (34, 34', 54) is a reduction in the width of the member in its flattened form.

3. A protection member according to claim 2, **characterised in that** the reduction in width is progressive.

4. A protection member according to one of claims 1 to 3, **characterised in that** the reduction in the cross-section of the tubular envelope (34, 34', 54) is a progressive, localised reduction (42, 42', 62) in the tube cross-section.

5. A protection member according to claim 1, **characterised in that** the envelope (54) is formed from two sheets of plastic material welded together along their longitudinal sides and, at the location of the preferred folding device (62), the distance between the two longitudinal sides is reduced.

6. A protection member according to any one of the previous claims, **characterised in that** the edges of the opening (60) of an end are offset in relation to each other in the longitudinal direction of the envelope (54).

7. A protection member board for protecting an arm of a pair of glasses, **characterised in that** it comprises a support sheet (64) and several protection members according to claim 5, attached to the support sheet.

8. A method for manufacturing temporary protection members for protecting the arms of a pair of glasses according to one of claims 1 to 6, **characterised in that** it comprises:
- a step for extruding a continuous tube made from a heat-shrinkable plastic material,
- a step for heating the tube in a localised manner to reduce its cross-section,
- then a step for cutting the tube at regular intervals to form sections of tube designed to constitute the envelopes (34) of the temporary protection members protecting the arms of a pair of glasses.

## Patentansprüche

1. Element zum zeitweiligen Schutz eines Brillenbügels gegen Chemikalien, wobei das Element eine längliche rohrförmige Hülle (34, 34', 44, 54) mit zumindest einem offenen Ende (38, 48, 60) umfasst, durch das sie auf einem Brillenbügel angebracht werden kann,
- wobei die Hülle (34, 34', 44, 54) aus Kunststoffmaterial gefertigt wird, das gegenüber den Behandlungschemikalien undurchlässig ist, und über ihre gesamte Länge hinweg einen solchen Querschnitt aufweist, dass der Brillenbügel nicht eingeklemmt wird, und ausreichend Platz um den Brillenbügel herum frei bleibt, um die Einführung eines Brillenbügels in die Hülle (34, 34', 44, 54) zu erleichtern,
- wobei die Hülle (34, 34', 44, 54) lang genug ist, um zumindest den größten Abschnitt eines Brillenbügels normal abzudecken,
- wobei die Hülle (34, 34', 44, 54) auf der Ebene eines Brillenbügels in Form eines Griffes eine in etwa gerade Form einnimmt, wenn sie auf einem solchen Bügel angebracht wird,
**dadurch gekennzeichnet, dass** die geradlinige Hülle (34, 34', 44, 54) an einer Stelle, die der Position der Biegung eines Brillenbügels in Form eines Griffes entspricht, eine bevorzugte Faltvorrichtung (42, 42', 52, 62) um eine Querachse umfasst, die dazu bestimmt ist, an dieser Stelle den Abstand zwischen dem inneren Rand der Biegung des Brillenbügels und dem Rand des Elements zu verringern, der an der Innenseite der Biegung angeordnet ist,
- wobei diese Faltvorrichtung durch eine Verengung oder eine Querschnittsverjüngung der Hülle gebildet wird, oder eine Raffung (52) der Hüllenwandung umfasst.

2. Schutzelement nach Anspruch 1, **dadurch gekennzeichnet, dass** die Querschnittsverjüngung der rohrförmigen Hülle (34, 34', 54) eine Verringerung der Breite des Elements in der geraden Form ist.

3. Schutzelement nach Anspruch 2, **dadurch gekennzeichnet, dass** die Verringerung der Breite progressiv verläuft.

4. Schutzelement nach einem der Ansprüche 1 bis 3, **dadurch gekennzeichnet, dass** die Querschnittsverjüngung der rohrförmigen Hülle (34, 34', 54) eine progressive lokale Verjüngung (42, 42', 62) des Rohrquerschnitts ist.

5. Schutzelement nach Anspruch 1, **dadurch gekennzeichnet, dass** die Hülle (54) aus zwei Kunststofffolien gebildet wird, die an den Längsseiten miteinander verschweißt sind, und der Abstand zwischen den beiden Längsseiten an der Stelle der bevorzugten Faltvorrichtung (62) verringert ist.

6. Schutzelement nach irgendeinem der vorherigen Ansprüche, **dadurch gekennzeichnet, dass** die Ränder der Öffnung (60) an einem Ende in der Längsrichtung der Hülle (54) jeweils zueinander versetzt sind.

7. Tafel mit Schutzelementen für Brillenbügel, **dadurch gekennzeichnet, dass** sie eine Haltefolie (64) und mehrere Schutzelemente nach Anspruch 5 umfasst, die auf der Haltefolie befestigt sind.

8. Verfahren zur Herstellung von Elementen zum zeitweiligen Schutz eines Brillenbügels nach einem der Ansprüche 1 bis 6, **dadurch gekennzeichnet, dass** es folgendes umfasst:
- einen Schritt zum Extrudieren eines durchgehenden Rohres aus Wärme-Schrumpf-Kunststoff,
- einen Schritt zum lokalen Erhitzen des Rohres zum Verringern seines Querschnitts,
- und danach einen Schritt zum Abschneiden des Rohres in regelmäßigen Abständen zur Bildung von Teilstücken des Rohres, die dazu bestimmt sind, Hüllen (34) der Elemente zum zeitweiligen Schutz von Brillenbügeln zu bilden.
